# EUROPÄISCHE PATENTSCHRIFT

(11) **EP 0 472 929 B1**
(45) Veröffentlichungstag und Bekanntmachung des Hinweises auf die Patenterteilung: **01.03.1995**
(21) Anmeldenummer: 91112662.1
(22) Anmeldetag: 27.07.1991
(51) Int. Cl.: F16J 15/54, F16J 15/56

(54) **Verwendung einer Dichtungsanordnung**
Use of a sealing arrangement
Utilisation d'un dispositif d'étoupage

(30) Priorität: 16.08.1990 DE 4025949
(43) Veröffentlichungstag der Anmeldung: 04.03.1992
(73) Patentinhaber: Voith Sulzer Stoffaufbereitung GmbH, 88191 Ravensburg (DE)
(72) Erfinder: Fey, Jürgen, W-7980 Ravensburg-Obereschach (DE); Strehle, Peter, W-7985 Baindt (DE)

(56) Entgegenhaltungen:
- EP-A- 0 219 683
- CH-A- 85 926
- DE-B- 1 211 506
- DE-B- 1 211 506
- FR-A- 2 349 061
- US-A- 3 701 488

## Beschreibung

Die Erfindung bezieht sich auf die Verwendung einer Dichtungsanordung zum Abdichten eines Raumes in einem zur Test-Mahlung von Papierfasern geeigneten Refiner.

Bei der Mahlung von suspendiertem Faserstoff in sogenannten Refinern werden diese mit einer wässrigen Faserstoffsuspension gefüllt oder von ihr durchströmt, und auf angetriebenen Wellen befestigte Mahlwerkzeuge werden gegen andere im Gehäuse oder auf gegenläufig angetriebenen Wellen fixierte Mahlwerkzeuge angepreßt und dadurch die dazwischen befindlichen Fasern gemahlen. Zum Verstellen der Leistung, Kompensation des Mahlwerkzeug-Verschleißes und Spülen der Maschine kann je nach Konstruktion die axiale Verschiebung der Welle erforderlich sein. Derartige Maschinen können in speziellen Formen zu Testmahlungen verwendet werden ("Laborrefiner"), wobei die Ermittlung der Mahlleistung besonders exakt ist, wenn die an der Welle gemessene Leistung frei ist von wechselnden oder hohen Reibwiderständen ist, die nicht aus der zu messenden Mahlung herrühren.

Eine bereits bekannte Anordnung wird benötigt, um z.B. den Innenraum des Mahl-Refinergehäuses, welches mit Fasersuspension gefüllt ist, gegen die Umgebung abzudichten, wenn eine Welle aus der Umgebung in den Innenraum des Gehäuses geführt wird, wobei das drehbare Teil nicht nur eine Rotationsbewegung ausführen soll, sondern auch eine axiale Verschiebebewegung. In solchen Fällen ist es üblich, die drehbare Welle mit einer mitdrehenden Hülse zu versehen, welche an ihrer Außenseite eine meist glatt bearbeitete Dichtfläche trägt, auf der eine im Gehäuse verankerte Dichtung gleitet. Entsprechend der axialen Erstreckung der bearbeiteten Dichtfläche auf der Hülse ist neben der ohnehin vorhandenen Umfangsbewegung auch eine axiale Bewegung möglich. Dabei werden als Dichtringe üblicherweise preßbare Packungsringe verwendet; es sind aber auch andere Lösungen denkbar und bekannt. So zeigt z.B. die PCT-Veröffentlichung WO 87/06991 eine Dichtungsanordnung mit einem auf die Welle angedrückten rohrförmigen Teil, das mit einer schmalen Dichtkante aufliegt.

Die vorgenannten Lösungen haben den Nachteil, daß infolge der axialen Bewegung die gleitende Berührung der Dichtelemente auf der Dichtfläche an sich ständig ändernden Stellen erfolgen muß. Dadurch werden sich in der Regel die Reibwerte ständig ändern. Es können auch unvorhersehbare Verschleißzustände entstehen, die früher oder später zur erhöhten Reibung und zum Versagen der Dichtung führen. Das bedeutet die Notwendigkeit ständiger Reparaturen oder Nachstellarbeiten. Das Austauschen solcher Verschleißteile, insbesondere der Wellenhülse, erfordert einen beträchtlichen Aufwand.

Dabei ist es auch von Bedeutung, daß die axiale Bewegung nicht nur etwa infolge Erwärmung oder elastischer Verformung der Bauteile im Mikrobereich erfolgt, sondern aus Funktionsgründen der abzudichtenden Maschine ganz gezielt axiale Verstellwege des drehbaren Teiles, z.B. mehrere Zentimeter, herbeigeführt werden.

Es ist Ziel der vorliegenden Erfindung, eine Anordnung der Dichtvorrichtungen so vorzunehmen, daß bei Gebrauch der Dichtvorrichtungen keine Veränderungen des Reibwiderstandes, insbesondere keine Erhöhungen, auftreten, der Verschleiß und die Wartungsansprüche sehr gering bleiben können und daß auch größere axiale Verschiebebewegungen möglich sind.

Die Ziele der Aufgabenstellung werden durch die im Patentanspruch 1 angegebenen Merkmale in vollem Umfang erreicht.

Die Ansprüche 2 bis 7 geben besonders vorteilhatte Ausführungen an.

Die Erfindung wird anhand von Zeichnungen erläutert; dabei zeigen
- Figur 1: schematisch ein Beispiel für die erfinderische Dichtungsanordnung,
- Figur 2 bis 4: je einen Ausschnitt aus Fig. 1 mit jeweils einer anderen vorteilhatten Ausführungsform der Dichtungsanordnung.

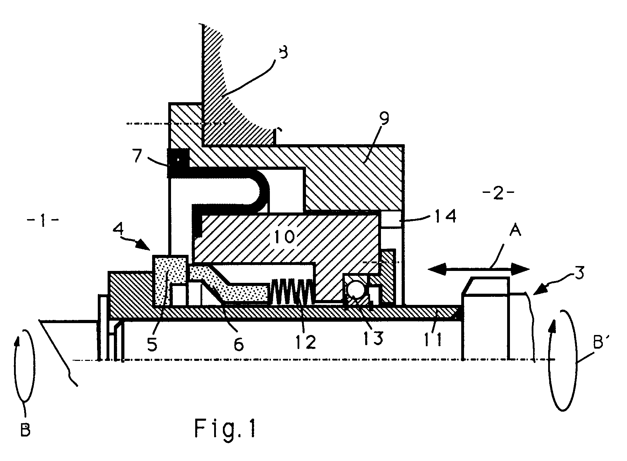

Das Ausführungsbeispiel gemäß Figur 1 stellt die beiden abzudichtenden Räume 1 und 2 dar, wobei hier 1 der durch eine Flüssigkeit gefüllte Innenraum eines Maschinengehäuses und der Raum 2 die Umgebung der Maschine sind. Ein rotierbares (Pfeile B, B') Teil 3, z.B. eine Welle, verläuft sowohl im Raum 1 als auch im Raum 2. Im Bereich der Dichtung ist die Welle durch eine Hülse 11 geschützt und durch ein Wälzlager 13 im nichtumlaufenden Ring 10 gelagert. Innerhalb des Ringes 10 wird durch eine Feder 12 ein z.B. keramischer Gleitring 6 gegen einen Gleitring 5 angedrückt, der an der Hülse 11 befestigt ist, so daß er mit Wellendrehzahl mitrotiert. Die Flachen, an denen sich die Ringe 5 und 6 berühren, sind als Dichtflächen dienende Gleitflächen. Der Ring 10 ist über eine Führung 14 mit dem Flansch 9 axial verschiebbar verbunden, jedoch ohne daß eine Rotation möglich wäre. Der Flansch 9 ist am Maschinengehäuse 8 angeschraubt. Die in der beschriebenen Art gegeneinander beweglichen Ringe 9 und 10 sind bei der in Figur 1 dargestellten Ausführung durch einen flexiblen Rollbalg 7 miteinander verbunden, der die Abdichtung an dieser Stelle übernimmt. Bei einer Relativbewegung (Pfeil A) des Ringes gegenüber dem Flansch 9 verformt sich der Rollbalg 7, ohne daß an dieser Stelle das Gleiten zweier Dichtflächen aufeinander erforderlich wäre.

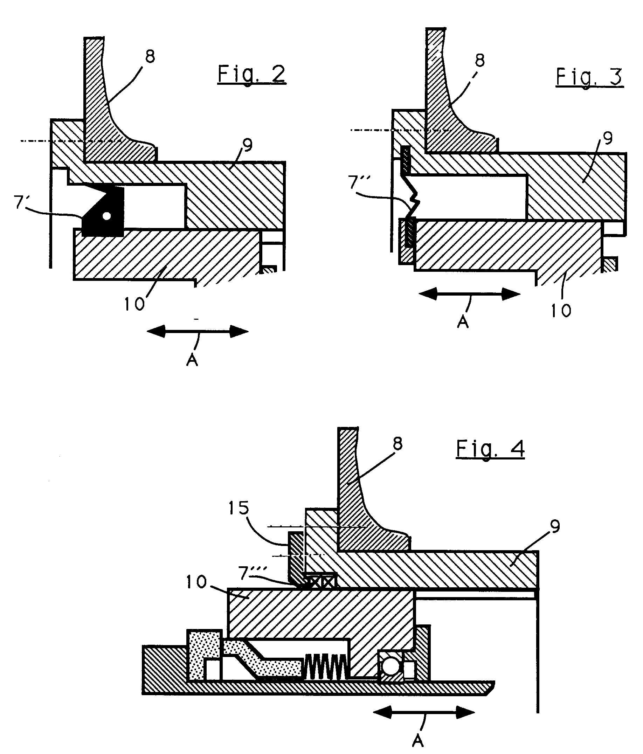

Eine andere Möglichkeit zeigt Figur 3 in Form eines membranförmigen hoch elastischen Metallteiles 7'', das die axiale Bewegung ebenfalls durch Verformung kompensiert.

Es ist auch denkbar, wie in Figur 2 dargestellt, einen axial gleitenden Dichtring 7' oder gemäß Figur 4 einen oder mehrere preßbare flexible Dichtkörper 7'' zu verwenden, die durch einen Preßring 15 unter Druck gesetzt und gegen den Ring 10, der zu diesem Zweck an seiner Oberkante eine bearbeitete Dichtfläche benötigt, angepreßt wird.

## Patentansprüche

1. Verwendung einer Dichtungsanordnung zum Abdichten eines Raumes (1) in einem zur Test-Mahlung von Papierfasern geeigneten Refiner mit einer zum Bewegen der Mahlwerkzeuge drehbar angetriebenen Welle, die insbesondere zur Einstellung der Mahlleistung axial verstellbar ist, wobei die Mahlleistung aus dem Drehwiderstand der angetriebenen Welle ermittelt und zur Berechnung der Mahlleistung von einer in Umfangsrichtung relativ geringen und weitestgehend zeitlich konstanten Reibungskraft der Dichtvorrichtung bzw. Dichtvorrichtungen ausgegangen wird, gegen einen anderen Raum (2), um das mit Fasersuspension gefüllte Maschinengehäuse, durch dessen Trennwand die Welle verläuft, am Wellenaustritt abzudichten, wobei die Dichtungsanordnung eine Radial-Dichtvorrichtung (4) aufweist, deren Dichtflächen eine Gleitringdichtung mit gegeneiander sich bewegenden Gleiringen (5 und 6) bilden und relativ zueinander lediglich eine Umfangsbewegung ausüben können, während ein anderer weiterer Teil der Dichtungsanordnung aus Teilen besteht, die zueinander nur in Axialrichtung des drehbaren Maschinenteiles (3) bewegbar sind.

2. Verwendung einer Dichtungsanordnung nach Anspruch 1, **dadurch gekennzeichnet**, daß die axiale Beweglichkeit durch die Verformbarkeit mindestens eines verbindenden Bauteiles gewährleistet ist, wodurch es in diesem Teil der Anordnung vermieden werden kann, daß Dichtflächen aufeinandergleiten.

3. Verwendung einer Dichtungsanordnung nach Anspruch 2, **dadurch gekennzeichnet**, daß das verformbare Bauteil ein Rollbalg (7) ist, der mit Teilen der Anordnung verbunden ist, die die Axialbewegung gegeneinander ausführen.

4. Verwendung einer Dichtungsanordnung nach Anspruch 2, **dadurch gekennzeichnet**, daß das verformbare Bauteil eine Metallmembran (7'') ist, die mit Teilen der Anordnung verbunden ist, die die Axialbewegung gegeneinander ausführen.

5. Verwendung einer Dichtungsanordnung nach Anspruch 1, **dadurch gekennzeichnet**, daß eines der relativ zueinander in Axialrichtung bewegbaren Teile eine Dichtfläche aufweist, auf der ein flexibler Dichtkörper (7'), insbesondere ein Gleit-Dichtring, relativ dazu in axialer Richtung gleitbar ist, wobei der Dichtkörper an einem der relativ zur Dichtfläche axialbeweglichen Teile befestigt ist.

6. Verwendung einer Dichtungsanordnung nach Anspruch 1, **dadurch gekennzeichnet**, daß eines der relativ zueinander in Axialrichtung bewegbaren Teile eine Dichtfläche aufweist, auf der ein preßbarer flexibler Dichtkörper (7'''), insbesondere ein Packungs- Dichtring, relativ dazu in axialer Richtung gleitbar ist, wobei der Dichtkörper an einem der relativ zur Dichtfläche axialbeweglichen Teile befestigt und verspannbar ist.

7. Verwendung einer Dichtungsanordnung nach einem der vorstehenden Ansprüche, **dadurch gekennzeichnet**, daß der Weg der ausführbaren axialen Bewegung mehr als
30 mm beträgt.

## Claims

1. The use of a sealing arrangement for sealing off from another space (2) a space (1) in a refiner suitable for the test-beating of paper-making fibres, with a rotationally-driven shaft for moving the beating tools, which shaft is axially adjustable in particular for setting the beating capacity, the beating capacity being determined from the rotation resistance of the driven shaft and for calculating the beating capacity the starting point is a frictional force of the sealing device or devices which is relatively low in the peripheral direction and as far as possible constant in time, in order to seal off the machine housing filled with pulp suspension, through the partition of which the shaft extends, at the exit of the shaft, the sealing arrangement having a radial sealing device (4), the sealing surfaces of which form a slide-ring seal with slide rings (5 and 6) which move towards each other and can only exert a peripheral movement relative to each other, whereas another further part of the sealing arrangement consists of parts which can be moved towards each other only in the axial direction of the rotatable machine part (3).

2. The use of a sealing arrangement according to Claim 1, characterised in that the axial mobility is ensured by the deformability of at least one connecting component, which means that it is possible to prevent sealing surfaces from sliding on each other in this part of the arrangement.

3. The use of a sealing arrangement according to Claim 2, characterised in that the deformable component is a rolling bellows (7) which is connected to parts of the arrangement which perform the axial movement towards each other.

4. The use of a sealing arrangement according to Claim 2, characterised in that the deformable component is a metal membrane (7'') which is connected to parts of the arrangement which perform the axial movement towards each other.

5. The use of a sealing arrangement according to Claim 1, characterised in that one of the parts which are movable towards each other in the axial direction has a sealing surface on which a flexible sealing body (7'), in particular a sliding sealing ring, can slide relative thereto in the axial direction, the sealing body being attached to one of the parts which are axially movable relative to the sealing surface.

6. The use of a sealing arrangement according to Claim 1, characterised in that one of the parts which are movable towards each other in the axial direction has a sealing surface on which a compressible flexible sealing member (7'''), in particular a packing sealing ring, can slide relative thereto in the axial direction, the sealing body being attached to and able to be clamped to one of the parts which are axially movable relative to the sealing surface.

7. The use of a sealing arrangement according to one of the preceding Claims, characterised in that the path of the axial movement which can be performed is more than 30 mm.

## Revendications

1. Utilisation d'un dispositif d'étanchéité pour rendre étanche un espace (1) par rapport à un autre espace (2) dans un raffineur approprié pour des essais de trituration de fibres de papier, avec un arbre entraîné en rotation pour mouvoir les outils de trituration, cet arbre étant, en particulier, réglable axialement pour le réglage du débit de trituration, ce débit étant mesuré d'après la résistance à la rotation de l'arbre entraîné, en prenant comme point de départ une force de frottement du ou des dispositifs d'étanchéité relativement faible et extrêmement constante dans le temps, afin de rendre étanche le boîtier de la machine remplie de suspension, à travers la cloison duquel s'étend l'arbre, sur la sortie de l'arbre, le dispositif d'étanchéité présentant un dispositif d'étanchéité radiale (4) dont les surfaces assurant l'étanchéité forment un joint à bagues d'étanchéité glissantes avec des bagues d'étanchéité (5 et 6) se mouvant l'une contre l'autre et ne pouvant exercer, l'une par rapport à l'autre, que seulement un mouvement périphérique, tandis qu'une autre partie du dispositif d'étanchéité est constituée par des pièces qui ne sont mobiles l'une par rapport à l'autre, que seulement dans le sens axial de la partie rotative (3) de la machine.

2. Utilisation d'un dispositif d'étanchéité selon la revendication 1, caractérisée en ce que la mobilité axiale est assurée par l'aptitude à la déformation d'au moins un élément de liaison, ce qui permet d'empêcher que, dans cette partie du dispositif, des surfaces d'étanchéité glissent l'une sur l'autre.

3. Utilisation d'un dispositif d'étanchéité selon la revendication 2, caractérisée en ce que l'élément déformable est un soufflet roulant (7) qui est lié à des pièces du dispositif qui exécutent le mouvement axial, l'une par rapport à l'autre.

4. Utilisation d'un dispositif d'étanchéité selon la revendication 2, caractérisée en ce que l'élément déformable est une membrane métallique (7'') qui est liée à des pièces du dispositif qui exécutent le mouvement axial, l'une par rapport à l'autre.

5. Utilisation d'un dispositif d'étanchéité selon la revendication 1, caractérisée en ce qu'une des pièces mobiles en sens axial, l'une par rapport à l'autre, présente une surface d'étanchéité sur laquelle peut glisser en sens axial, par rapport à celle-ci, un corps d'étanchéité flexible (7'), en particulier une bague d'étanchéité glissante, le corps d'étanchéité étant fixé à une des pièces mobiles axialement par rapport à la surface d'étanchéité.

6. Utilisation d'un dispositif d'étanchéité selon la revendication 1, caractérisée en ce qu'une des pièces mobiles en sens axial, l'une par rapport à l'autre, présente une surface d'étanchéité sur laquelle peut glisser en sens axial par rapport à elle un corps d'étanchéité flexible et compressible (7'''), en particulier une bague d'étanchéité à garniture, le corps d'étanchéité étant fixé à une des pièces mobiles axialement par rapport à la surface d'étanchéité et étant susceptible d'être comprimé.

7. Utilisation d'un dispositif d'étanchéité selon une des revendications précédentes, caractérisée en ce que la course du mouvement axial pouvant être effectué est supérieure à 30 mm.
